# EUROPEAN PATENT APPLICATION

(11) **EP 2 960 996 A1**
(43) Date of publication of application: **30.12.2015**
(21) Application number: 15172496.0
(22) Date of filing: 17.06.2015
(51) Int. Cl.: H01R 4/24, H02S 40/34

(54) **PHOTOVOLTAIC JUNCTION BOX**

(30) Priority: 27.06.2014 CN 201420350583 U
(71) Applicant: Tyco Electronics (Shanghai) Co. Ltd., Shanghai (CN); Tyco Electronics Holdings (Bermuda) No. 7 Limited, HM 11 Hamilton (BM)
(72) Inventor: Zhong, Yuan, Shanghai, (CN); Tao, Ting, Shanghai, (CN); Ke, Shiying, HM 11 Hamilton (BM)
(74) Representative: Grünecker Patent- und Rechtsanwälte PartG mbB

(57) **Abstract**

Disclosed is a photovoltaic junction box comprising a housing and a plurality of connecting terminals mounted in the housing. Each connecting terminal includes constructed to electrically connect with a cable introduced into the housing and a crimping mechanism disposed at one end of the main body portion to electrically connect with a conductive sheet introduced into the housing in a manner of pressing. The crimping mechanism comprises a base extending from the main body portion in a first direction and at least one bending portion integrally connected with the base and bending towards the base to press the conductive sheet onto the base. By bending the bending portion, the connection terminal is electrically and mechanically connected with the conductive sheet in the crimping manner with relative larger force, thereby decreasing the contact resistance between the connection terminal and the conductive sheet and improving electricity transmission efficiency. The holding force of the connection terminal applied on the conductive sheet is permanent, and will not be decreased with the time, so that transmission stability and quality of electrical signals are improved.

## Description

### CROSS-REFERENCE TO RELATED APPLICATION

This application claims the benefit of Chinese Patent Application No. 201420350583.6 filed on June 27, 2014 in the State Intellectual Property Office of China, the whole disclosure of which is incorporated herein by reference.

### BACKGROUND OF THE INVENTION

### Field of the Invention

Embodiments of the present invention generally relate to a junction box, and more particularly to a photovoltaic junction box for connecting conductive sheets of a solar photovoltaic assembly.

### Description of the Related Art

In an electronic system, such as a solar photovoltaic assembly, a communicating assembly and the like, for transmitting weak electrical signals, it is necessary to transmit the weak electrical signals into an electronic device disposed in a junction box by electrically conductive sheets (also referred as bus bars) to perform collection, forwarding or other processes. The junction box is provided with connecting terminals for electrically conductive sheets and connecting sheets connected between the connecting terminals and the electronic device.

As known by the inventor, a photovoltaic junction box generally comprises: a housing provided with a through hole for introducing an external cable thereon; a connecting terminal electrically connected with the introduced external cable through, for example, welding; and an electrically conductive sheet (a bus bar) connected between the connecting terminal and an electronic device (not shown), such as solar photovoltaic assembly. The conductive sheet is made of a thin metal material such as a copper foil and electrically connected with the connecting terminal through welding. Since the conductive sheet is very thin, a pseudo soldering may be generated during welding of the conductive sheet with the connecting terminal, which may result in a poor contact therebetween so that the conductive sheet is electrically connected with the connecting terminal intermittently. Further, a contact resistance between the conductive sheet and the connecting terminal is very high and thus an arc even may be generated, which results in a big potential risk. In addition, the welding process is very complicated and time-consuming, and components weld together are not easily separated from each other, which is not conducive for maintenance of a power generation panel of the solar photovoltaic assembly.

In the photovoltaic junction box, another method for achieve an electrical connection of the conductive sheet with the connecting terminal is to use a holding member such as a spring clip to clamp them. However, using the holding member to clamp the electrically conductive sheet and the connecting terminal may result in a complicated structure and a high cost of the photovoltaic junction box. At the same time, since clamping the conductive sheet is performed by means of an elastic deformation of a metal, a clamping force provided by the spring clip is limited.

### SUMMARY OF THE INVENTION

The present invention has been made to overcome or alleviate at least one aspect of the above mentioned disadvantages.

The present invention provides a photovoltaic junction box for a solar energy photovoltaic system which may achieve a firm mechanical connection between sheet-shaped connecting terminals and conductive sheets by a simply operation, improving transmission stability of weak signals and transmission quality of the signals.

According to an aspect of the present invention, there is provided a photovoltaic junction box comprising a housing and a plurality of connecting terminals mounted in the housing. Each connecting terminal includes a main body portion constructed to electrically connect with a cable introduced into the housing and a crimping mechanism disposed at one end of the main body portion to electrically connect with an electrically conductive sheet introduced into the housing in a manner of pressing.

In the photovoltaic junction box as described above, the crimping mechanism comprises a base extending from the main body portion in a first direction and at least one bending portion integrally connected with the base and bending towards the base to press the conductive sheet onto the base.

In the photovoltaic junction box as described above, two bending portions extend from both sides of the base parallel to the first direction, respectively.

In the photovoltaic junction box as described above, the base extends upwardly perpendicular to a plane in which the main body portion is located.

In the photovoltaic junction box as described above, both the base and the bending portion are provided with a plurality of grooves extending in a second direction perpendicular to the first direction thereon.

In the photovoltaic junction box as described above, each groove protrudes outwardly from an inner side of the crimping mechanism for clamping the conductive sheet.

In the photovoltaic junction box as described above, a bottom of the housing is provided with a plurality of pairs of positioning devices protruding upwardly thereon with one connecting terminal being disposed between each pair of the positioning devices.

In the photovoltaic junction box as described above, each pair of positioning devices are provided with blocking portions projected oppositely to prevent the connecting terminal from being disengaged from between the pair of the positioning devices thereon.

In the photovoltaic junction box as described above, recesses for partially accommodating the positioning devices are formed on both sides of the connecting terminal.

In the photovoltaic junction box as described above, wherein the main body portion is provided with a plurality of protrusions protruding upwardly thereon.

In the photovoltaic junction box according to the embodiments of the present invention as described above, by bending the bending portion, the connection terminal is electrically and mechanically connected with the conductive sheet in the crimping manner with relative larger force, thereby decreasing the contact resistance between the connection terminal and the conductive sheet and improving electricity transmission efficiency. The holding force of the connection terminal applied on the conductive sheet is permanent, and will not be decreased with the time, so that transmission stability and quality of electrical signals are improved.

### BRIEF DESCRIPTION OF THE DRAWINGS

The above and other features of the present invention will become more apparent by describing in detail exemplary embodiments thereof with reference to the accompanying drawings, in which:
Figure 1 is an illustrative perspective view of a photovoltaic junction box according to an exemplary embodiment of the present invention, wherein conductive sheets have not been pressed by connecting terminals;
Figure 2 is another illustrative perspective view of the photovoltaic junction box according to an exemplary embodiment of the present invention, wherein the conductive sheets have not been pressed by the connecting terminals;
Figure 3 is an illustrative partial enlarged view of the photovoltaic junction box as shown in Figure 2;
Figure 4 is an illustrative enlarged view of a crimping of two sets of connecting terminals with the conductive sheets in the photovoltaic junction box as shown in Figure;
Figure 5 is an illustrative perspective view of a connecting terminal of the photovoltaic junction box with a crimpling mechanism being in a un-pressed state according to an exemplary embodiment of the present invention; and
Figure 6 is an illustrative perspective view of the connecting terminal of the photovoltaic junction box with the crimpling mechanism being in a pressed state according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In addition, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

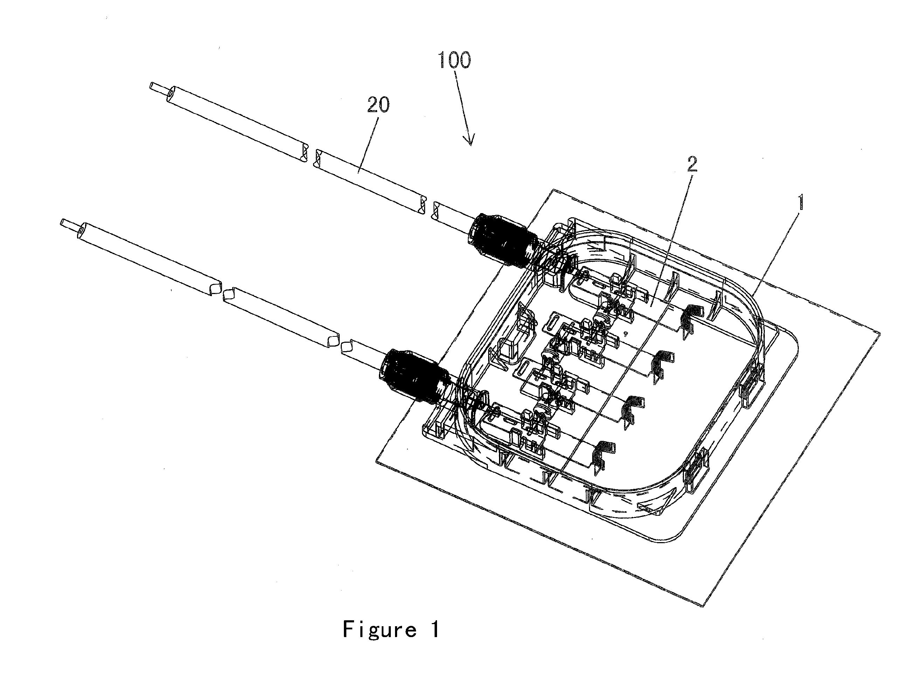

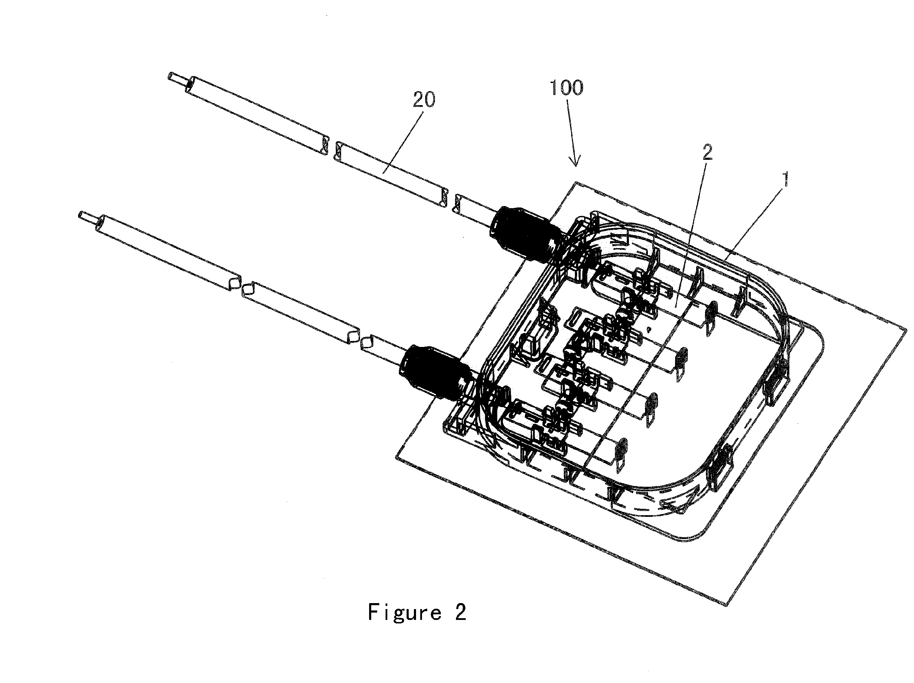

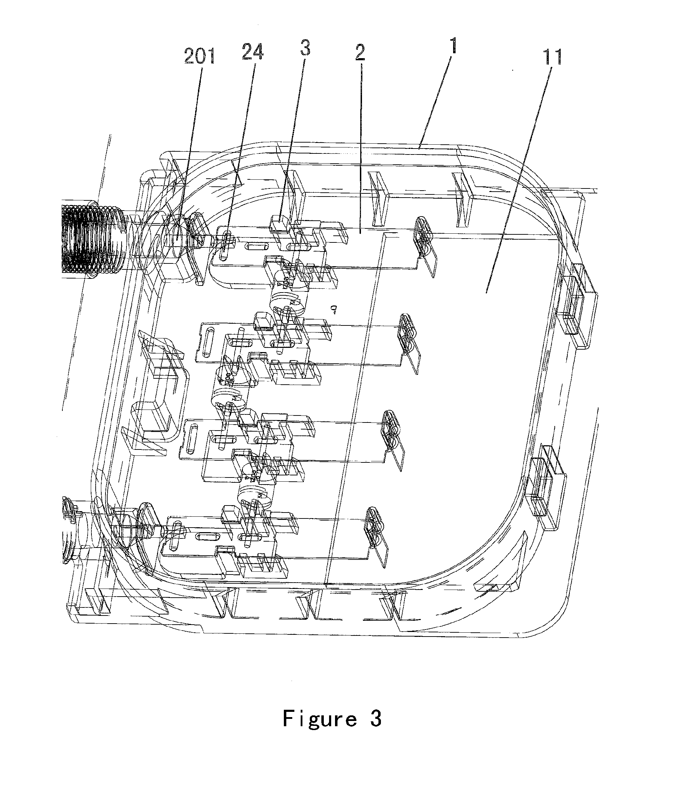

Referring to Figures 1 to 6, a photovoltaic junction box 100 according to an exemplary embodiment of the present invention is used to connect electrically conductive sheets 10 in a electronic system, such as a solar photovoltaic module, communication assembly, for generating or transmitting weak electrical signals, and specifically to eclectically connect the electrically conductive sheets 10 to connecting terminals 2 of a electronic device provided in the photovoltaic junction box 100 which further processes or transmits the weak electrical signals transmitted from the conductive sheets.

A photovoltaic junction box 100 according to an exemplary embodiment of the present invention comprises: a housing 1 made of an insulating material for example; and a plurality of connecting terminals 2 mounted in the housing 1. Each connecting terminal 2 includes a main body portion 21 for electrically connecting with a cable 20 introduced into the housing 1; and a crimping mechanism 22 disposed at one end of the main body portion 21 to electrically connect with an electrically conductive sheet 10 introduced into the housing 1 in a manner of pressing.

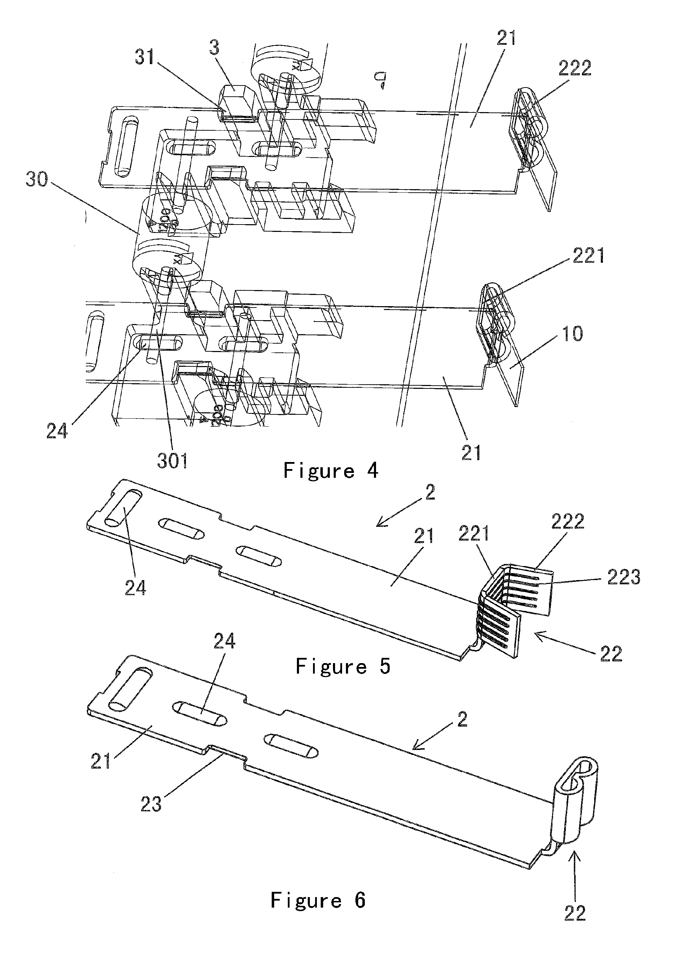

As shown in Figures 4 to 6, in an exemplary embodiment of the connecting terminal 2, the crimpling mechanism 22 includes a base 221 extending from the main body portion 21 in a first direction (a longitudinal direction of the connecting terminal 2) and at least one bending portion 222 each of which is integrally connected with the base 221 and constructed to bend towards the base 221 to press the conductive sheet 10 onto the base 221. Further, two bending portions 222 extend from both sides of the base 221 parallel to the first direction, respectively. In addition, the base 221 extends upwardly perpendicular to a plane, in which the main body portion 21 is located, in a direction away from a bottom of the housing 1. As illustrated in Figure 5, before the conductive sheet 10 is not pressed by the crimping mechanism 22, each of the bending portions 222 connected to both sides of the base 221 bends at an angle such as 80 to 120 degree relative to the base 221, so that the crimping mechanism 2 has a relatively small width and thus a bending operation become easier. Furthermore, it is possible for the electrically conductive sheet 10 passing through a through hole, for example, formed in the bottom of the housing 1 to be introduced therein to be easily inserted into the crimping mechanism 22 which is not crimped.

In the photovoltaic junction box 100 according to the exemplary embodiment of the present invention, both the base 221 and the bending portions 222 are provided with a plurality of grooves 223 extending in a direction perpendicular to the first direction thereon. Each of the grooves 223 protrudes outwardly from an inner side of the crimping mechanism 22 for clamping the electrically conductive sheet 10. For example, the plurality of grooves 223 parallel to each other may be formed by means of punching. In this way, each of the grooves 223 protrudes at outer sides of the base 221 and the bending portions 222, which accordingly form a reinforcing rib, so that the two bending portions 222 may wrap the conductive sheet 10 together with the base 221 in a case where the conductive sheet 10 is pressed by the crimping mechanism 22, as shown in Figure 6. At this time, a part of the groove 223 protrudes outwardly function to maintain a bending state of the bending portions 222. In this way, the bending portions 222 having the grooves 223 may provide a greater pressing force, the crimping mechanism 22 will generate an irreversible metal deformation during crimping and apply a greater permanent pressing force to the conductive sheet (a bus bar) 10, and the pressing force will not gradually become smaller over time. Further, it is possible to avoid quality problems such as pseudo soldering during soldering by using the crimping mechanism 22 to electrically connect the connecting terminal 2 with the conductive sheet 10 by a mechanical operation without a soldering operation.

With reference to Figures 1 to 4, in the photovoltaic junction box 100 according to the present application, the bottom 11 of the housing 1 is provided with a plurality of pairs of positioning devices 3 in a form of pillar upwardly projecting thereon with one connecting terminal 2 being disposed between each pair of the positioning devices. Each pair of positioning devices 3 are provided with blocking portions 31 projected oppositely to prevent the connecting terminal 2 from being disengaged from between the pair of positioning devices 3. Further, as shown in Figures 5 and 6, the recesses 23 for partially accommodating the positioning devices 3 are formed on both sides of the connecting terminal 2. The connecting terminal 2 may be pressed from an upper part of each positioning device 3 downwardly so that the upper part of the positioning device 3 is offset outwardly. The upper part of the positioning device 3 will return back to its original state after the recesses 23 of the connecting terminal 2 move across the blocking portion 31. In this way, the blocking portions 31 is constructed to prevent the connecting terminal 2 from moving upwardly to disengage from the positioning devices 3, and the recesses 23 is cooperated with the positioning devices 3 to prevent the connecting terminal 2 from moving in a fore-and-aft direction, so that the connecting terminal 2 is firmly held within the housing 1.

As illustrated in Figures 5 and 6, the main body portion 21 is provided with a plurality of protrusions 24 protruding upwardly and formed by punching for example. Those protrusions 24 are electrically connected with pins 304 of an electronic device 30 and a conductor portion 201 of the cable 20 by a welding operation for example, respectively.

In the present invention, the respective portions of the connecting terminals 2 may be formed by a single piece of conductive metal sheet, such as a copper sheet, through shearing, punching, bending and other processes. The connecting terminal may be crimped into a predetermined shape using crimping tool and the conductive sheet is wrapped into the crimping mechanism. The bending portion and the base of the connecting terminal may generate irreversible metallic deformation during the crimping and produce a greater permanent pressing force. For example, it is also possible to automatically manufacture the connecting terminals of the present invention using specialized equipments. Moreover, the photovoltaic junction box of the present invention has a simple structure and low cost.

It would be appreciated by those skilled in the art the embodiment as described and shown above are exemplary and various changes or modifications may be made thereto. Structures described in various embodiments may be combined in any forms without conflicting with each other in structure or concept of the present invention to achieve more photovoltaic junction box based on the technical problem of the present invention.

After describing and showing the preferable embodiments of the present invention in details, it would be appreciated by those skilled in the art that various changes or modifications may be made in these embodiments without departing from the principle and spirit of the disclosure, and the present invention is not limited to the exemplary embodiment as described and shown above. It should be noted that phase "comprise" or "include" does not exclude other elements or steps, and the phrase "a" or "an" does not exclude multiple. In addition, any reference numerals in claims should not be construed as limiting the scope of the present invention.

## Claims

1. A photovoltaic junction box comprising
a housing; and
a plurality of connecting terminals mounted in the housing, each connecting terminal including:
a main body portion constructed to electrically connect with a cable introduced into the housing; and
a crimping mechanism disposed at one end of the main body portion to electrically connect with a conductive sheet introduced into the housing in a manner of pressing.

2. The photovoltaic junction box according to claim 1, wherein the crimping mechanism comprises:
a base extending from the main body portion in a first direction; and
at least one bending portion integrally connected with the base and bending towards the base to press the conductive sheet onto the base.

3. The photovoltaic junction box according to claim 2, wherein two bending portions extend from both sides of the base parallel to the first direction, respectively.

4. The photovoltaic junction box according to claim 3, wherein the base extends upwardly perpendicular to a plane in which the main body portion is located.

5. The photovoltaic junction box according to claim 2, wherein both the base and the bending portion are provided with a plurality of grooves extending in a second direction perpendicular to the first direction thereon.

6. The photovoltaic junction box according to claim 5, wherein each groove protrudes outwardly from an inner side of the crimping mechanism to clamp the conductive sheet.

7. The photovoltaic junction box according to claim 5, wherein a bottom of the housing is provided with a plurality of pairs of positioning devices protruding upwardly thereon, one connecting terminal being disposed between each pair of the positioning devices.

8. The photovoltaic junction box according to claim 7, wherein each pair of positioning devices are provided with blocking portions projected oppositely to prevent the connecting terminal from being disengaged from between the pair of the positioning devices thereon.

9. The photovoltaic junction box according to claim 8, wherein recesses for partially accommodating the positioning devices are formed on both sides of the connecting terminal.

10. The photovoltaic junction box according to claim 1, wherein the main body portion is provided with a plurality of protrusions protruding upwardly thereon.
